(19) Europäisches Patentamt
European Patent Office
Office européen des brevets

(11) **EP 4 471 701 A1**

(12) **EUROPEAN PATENT APPLICATION**

(43) Date of publication:
**04.12.2024  Bulletin 2024/49**

(21) Application number: **24172699.1**

(22) Date of filing: **26.04.2024**

(51) International Patent Classification (IPC):
**G06Q 30/0601** (2023.01)    **G06N 3/045** (2023.01)

(52) Cooperative Patent Classification (CPC):
**G06Q 30/0631; G06N 3/045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.05.2023  US 202363504959 P**
**25.08.2023  US 202318455725**

(71) Applicant: **Apple Inc.**
**Cupertino, CA 95014 (US)**

(72) Inventors:
• **SHEN, Junyi**
**Cupertino, 95014 (US)**
• **GU, Xiaoyuan**
**Cupertino, 95014 (US)**
• **DE OLIVEIRA, Dayvid Victor Rodrigues**
**Austin, 78729 (US)**

(74) Representative: **Zacco Denmark A/S**
**Arne Jacobsens Allé 15**
**2300 Copenhagen S (DK)**

(54) **RELATIONSHIP CLASSIFICATION FOR CONTEXT-SENSITIVE RELATIONSHIPS BETWEEN CONTENT ITEMS**

(57)    The present technology pertains to receiving at least one reference item and at least one candidate item by a context-sensitive classifier, and providing a prediction, by the context-sensitive classifier, of whether the candidate item is contextually compatible or incompatible with the reference item. The present technology can determine whether to present the candidate item in a user interface based on the prediction of whether the candidate item is contextually compatible or incompatible with the reference item.

FIG. 1

EP 4 471 701 A1

**Description**

BACKGROUND

Content recommendation engines have become increasingly important in today's digital landscape, where there is a vast amount of content available across various platforms. Users often rely on content recommendation engines to discover relevant and interesting content tailored to their preferences. Content providers utilize recommendation engines as a mechanism for advertising related content items.

Recommendation engines often rely on machine learning algorithms to identify items that are similar to the reference item, that pertains to a related category to that of the reference item, or that a user might view in relation to the reference item.

BRIEF DESCRIPTION OF THE SEVERAL VIEWS OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:

FIG. 1 illustrates an example system for identifying a content item to be recommended along with a reference item in accordance with some embodiments of the present technology.

FIG. 2 illustrates an example routine for determining whether a candidate item is contextually compatible with a reference item in accordance with some embodiments of the present technology.

FIG. 3 illustrates an example of the context-sensitive classifier in accordance with some embodiments of the present technology.

FIG. 4 illustrates an example routine for training the context-sensitive classifier in accordance with some aspects of the present technology.

FIG. 5 illustrates an example sampling strategy for active learning in accordance with some aspects of the present technology.

FIG. 6 illustrates an example of a deep learning neural network that can be used to implement a context-sensitive classifier, according to some aspects of the present technology.

FIG. 7 illustrates an example lifecycle of a ML model in accordance with some aspects of the present technology.

FIG. 8 shows an example of a system for implementing some aspects of the present technology.

DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

As used herein the term "configured" shall be considered to interchangeably be used to refer to configured and configurable, unless the term "configurable" is explicitly used to distinguish from "configured". The proper understanding of the term will be apparent to persons of ordinary skill in the art in the context in which the term is used.

The disclosed technology addresses the need in the art for identifying pairs of content items that might be deemed relevant. Although the pair of content items might be relevant they may be associated with a context that can influence whether the content items should be presented together. For example, content items associated with two incompatible contexts should be discouraged from being presented together. In another example, content items that are aligned in context should be encouraged to be presented together.

Recommendation systems are essential to aiding users in discovering new content. However, systems for item-to-item recommendation tasks are often based on a shallow level of contextual relevance, which can make the system insufficient for tasks where item relationships are more nuanced. Contextually relevant item pairs can sometimes have controversial or problematic relationships, and they could degrade user experiences and brand perception when recommended to users. For example, a recommendation of a book about divorce and a book about co-parenting can create a disturbing experience for someone who is downloading or viewing a book about marriage therapy.

Item-to-item recommendation systems are effective for delivering contextually relevant recommendations to users. Therefore, product features like "Often bought together", "Because you watched", and "You might also like" are present in many online services for books, music, apps, movies, and more. These features help users discover relevant and interesting content based on similar or complementary content with which they have already engaged. However, item-to-item associations are sometimes inappropriate from the perspective of certain users or developers. For example, a user downloading a book dealing with a miscarriage may not appreciate a recommendation for books on fetal development through pregnancy, and a user buying a sobriety tracking workbook may not appreciate a book recommendation on cocktail recipes. Similar examples can be found in other online services like podcasts, apps, music, or movies.

The present technology pertains to a system for predicting whether a pair of content items demonstrate a type of contextual relationship. For example, the present technology can be used to determine if a pair of content items have a sensitive contextual relationship. Pairs of content items that have a sensitive contextual relationship may be perceived as offensive, insensitive, objectionable, or problematic when presented together. Recommendation of a recommended item which has a sensitive contextual relationship with a reference item is rooted in a lack of deep understanding of relationships between items, meaning they may only consider shallow features, like item similarity and co-engagement by users, without understanding the contexts of the items. Such recommendations could be insensitive and offend users.

Examples of sensitive contextual relationships can include incompatible audience age ranges (e.g., content for juvenile and mature categories), conflicting audiences (e.g., content for hiking and content for living in a wheelchair), sensitive categories (e.g., relationships, money, religion, etc.), dangerous categories (e.g, alcohol, drugs, guns, etc.), opposite purposes e.g., (content regarding relationship counseling and divorce, content regarding alcoholism and cocktail recipes, etc.), unwanted temptations (e.g., content regarding gambling and gambling addiction, etc.), insensitive combinations (e.g. content regarding relationship counseling and divorce, etc.), insensitive event locations (e.g. Events happening in one location when the user is located in another location, etc.).

While the present description predominantly provides examples of content items that are associated with a sensitive contextual relationship this is only because such pairs of content items provide clear examples of the present technology, but these examples should not be considered limiting. For example, a recommended item about leg workouts should not be provided along with a reference item about being physically fit in a wheelchair, or a recommended item about cocktail recipes should not be provided with a reference item about giving up drinking. These are obvious examples of content items that might be relevant, but that are not compatible. But other contextual relationships exist too. Some content items might not appear to be as relevant, but they contextually support each other. For example, a content item on interacting with an embassy might not be strongly relevant to a content item about an international destination, but their context could be supportive and therefore encouraged to be presented together.

While Applicant contemplates the practice of the present technology in a privacy-preserving manner (in fact Applicant prefers to access as little user data as possible), it is acknowledged that some aspects of the present technology can be used with practices that gather and use data available from various sources to improve the delivery to users of invitational content or any other content that may be of interest to them. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to deliver targeted content that is of greater interest to the user. Accordingly, use of such personal information data enables users to calculated control of the delivered content. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services or anytime thereafter. In another example, users can select not to provide mood-associated data for targeted content delivery services. In yet another example, users can select to limit the length of time mood-associated data is maintained or entirely prohibit the development of a baseline mood profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publicly available information.

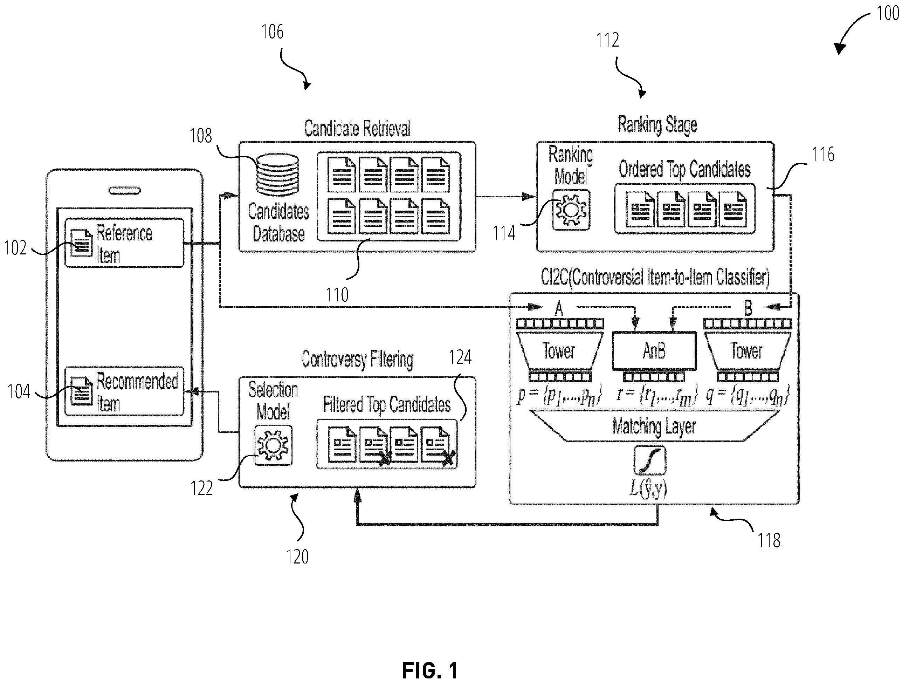

FIG. 1 illustrates an example system 100 for identifying a content item to be recommended along with a reference item 102 in accordance with some embodiments of the present technology.

System 100 includes a recommended item candidate retrieval stage 106 for identifying candidate items 110 that may be relevant to the reference item 102. Given a reference item that is being viewed by the user, the recommended item candidate retrieval stage 106 reduces the possible candidates in candidates database 108 from millions to hundreds of candidate items 110 or less.

While the present disclosure refers to a reference item because it is generally anticipated that the reference item will be a content item like a media item such as a webpage, book, application, video, music, social media post, and/or product, the reference item could be a search string or even a user account. The required attribute of the reference item is that candidate items can be identified that are relevant to the reference item, and that the reference item is associated with a context.

System 100 includes a ranking stage 112 for ordering the candidate items 110 using a ranking model 114. The ranking model 114 can fine-tune the ordering of the candidate items 110 to be presented to users. For example, the ranking model 114 can be a machine learning algorithm that identifies items that are similar to the reference item, that pertains to a related category of the reference item, or that a user might view in relation to the reference item. Such algorithms often power item-to-item recommendation systems like "Often bought together", "Because you watched", and "You might also like." The output of the ranking stage 112 is one or more of the highest-ranked, or most relevant candidates based on the reference item.

While the recommended item candidate retrieval stage 106 and ranking stage 112 are shown as separate stages, it can be possible for these to be combined into a single stage.

The ranked candidates 116 can be provided to the context-sensitive classifier 118. In some embodiments, the context-sensitive classifier 118 is trained to predict how likely a user will consider the reference item 102 and the candidate item to be viewed through a given context. For example, the context-sensitive classifier 118 can be trained to predict whether a user would consider the reference item 102 and the candidate item to be subject to a sensitive contextual relationship. In another example, the context-sensitive classifier 118 can be trained to predict whether a user would consider the reference item 102 and the candidate item to be subject to a supportive relationship. In some embodiments, the context-sensitive classifier 118 can be trained to classify the type of relationship (e.g., context-sensitive, supportive, etc.) and a confidence in the classification.

The context-sensitive classifier 118 can determine a score or prediction probability of how likely a user will consider the reference item 102 and the candidate item to be viewed through a given context, and pass the results on to the context filtering stage 120. In some embodiments, candidate items that are likely to be viewed as having an incompatible, sensitive contextual relationship with the reference item can be filtered. In some embodiments, the prediction probability can be a factor in a function used by selection model 122 to select one of the candidate items as the recommended item 104. For example, the selection model 122 could use the prediction probability to calculate a weighting factor to multiply against a relevance score to determine which candidate item should be the recommended item. In some embodiments, when the prediction probability is above a threshold, indicating likely a negative contextual relationship, the candidate can be filtered without further consideration.

Collectively, the various stages of system 100 can provide a recommended item 104 that is both relevant and contextually compatible.

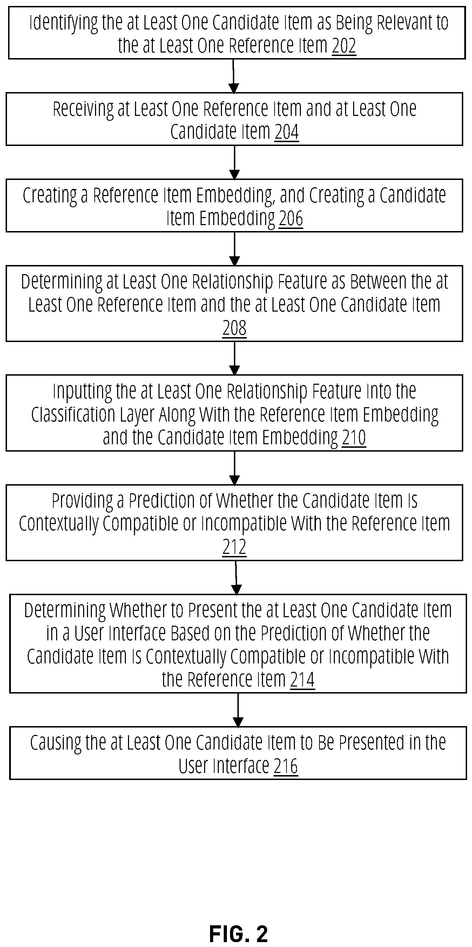

FIG. 2 illustrates an example routine for determining whether a candidate item is contextually compatible with a reference item in accordance with some embodiments of the present technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes identifying at least one candidate item as being relevant to the at least one reference item at block 202. For example, the recommended item candidate retrieval stage 106 and the ranking stage 112 illustrated in FIG. 1 may identify at least one candidate item as being relevant to at least one reference item.

As addressed above, the at least one reference item can be a search criterion, a user profile, a media item such as a book, application, video, music, website, social media post, and/or a product. These are just examples, the required attribute of the reference item is that candidate items can be identified that are relevant to the reference item, and that the reference item is associated with a context.

The at least one candidate item is a media item such as a book, application, video, music, website, social media post, and/or a product. These are just examples, the required attribute of the candidate item is that it is associated with a context. In some embodiments, the candidate item might not necessarily be relevant. For example, if the candidate item is a promoted item it might or might not be relevant. But even promoted candidate items should be evaluated for contextual relationships with the reference item.

According to some examples, the method includes receiving at least one reference item and at least one candidate item at block 204. For example, the context-sensitive classifier 118 illustrated in FIG. 1 may receive at least one reference item and at least one candidate item.

According to some examples, the method includes creating a reference item embedding and creating a candidate item embedding at block 206. For example, the context-sensitive classifier 118 illustrated in FIG. 1 may create a reference item embedding, and creating a candidate item embedding.

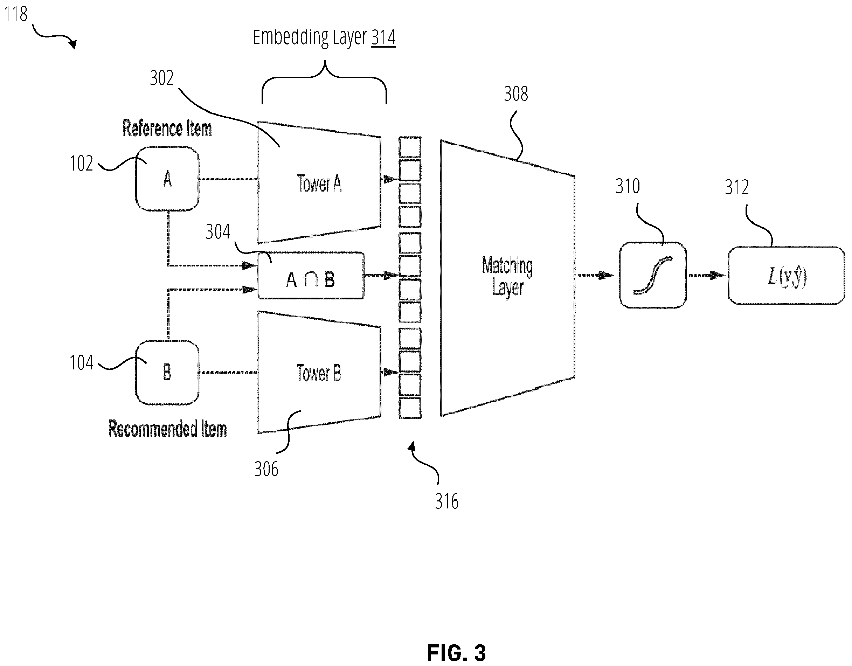

As illustrated in FIG. 3, the context-sensitive classifier 118 includes an embedding layer 314, a neural network 308, and a classification layer 310. In some embodiments, the neural network 308 is a multi-layer perceptron neural network.

The embedding layer is a two-tower neural network model that generates the reference item embedding and the candidate item embedding. The reference item embedding function 302 independently generates the reference item embedding, and the candidate item embedding function 306 independently generates the candidate item embedding.

In some embodiments, the embedding layer 314 utilizes a language model as the reference item embedding function 302 and the candidate item embedding function 306 to create the reference item embedding and the candidate item embedding. The language model can be specialized through tuning using a dataset of advertisements relevant to content items. In some embodiments, the language model can be a large language model or a transformer-based large language model.

According to some examples, the method includes determining at least one relationship feature as between the at least one reference item and the at least one candidate item at block 208. For example, the context-sensitive classifier 118 illustrated in FIG. 1 may determine at least one relationship feature as between the at least one reference item and the at least one candidate item.

A "Relationship feature" refers to a parameter or expression descriptive of the relationship between the reference item and the candidate item. A relationship feature can be a measure of the similarity or relevance of the candidate item to the reference item. For example, the measure can be a similarity score, the distance between embeddings in an embedding space, etc. A relationship feature can be an expression stating a relationship between the attributes of the candidate item and the reference item. For example, an expression that it is false that the candidate item and the reference item belong to the same genre or an expression that it is true that the candidate item and the reference item have compatible topics. Some attributes for which an expression might be useful in this context include attributes that indicate whether the candidate item and the reference item are appropriate for audiences in different age bands, or are appropriate for audiences with different labels. For example, a kids reference item is not compatible with a mature audience candidate item. Other attributes for which an expression might be useful in this context include attributes that indicate whether the candidate item and the reference item pertain to topic categories that mix or don't, mix. For example, a reference item pertaining to marriage counseling does not mix with a candidate item pertaining to divorce. Other attributes for which an expression might be useful in this context include attributes that indicate whether a candidate item is spatially relevant to the reference item. For example, a reference item pertaining to an event occurring in Miami does not mix with a reference item pertaining to a candidate item having to do with Hong Kong. Other attributes for which an expression might be useful can be relevant to a supportive nature between two content items. For example, a statement that a first topic (e.g. Obtaining a visa) is supportive of a second topic (e.g., travel to an international destination).

According to some examples, the method includes inputting at least one relationship feature into the classification layer along with the reference item embedding and the candidate item embedding at block 210. For example, the context-sensitive classifier 118 illustrated in FIG. 1 may input at least one relationship feature into the classification layer along with the reference item embedding and the candidate item embedding.

As illustrated in FIG. 3 the relationship feature 304 is provided along with the reference item embedding and the candidate item embedding to the neural network 308.

According to some examples, the method includes providing a prediction of whether the candidate item is contextually compatible or incompatible with the reference item at block 212. For example, the context-sensitive classifier 118 illustrated in FIG. 1 may provide a prediction of whether the candidate item is contextually compatible or incompatible with the reference item.

As illustrated in FIG. 3, the classification layer 310 of the context-sensitive classifier 118 provides a prediction of whether the candidate item is contextually compatible or incompatible with the reference item. The prediction can include a probability of whether the pair of the reference item and the candidate item would be considered contextually compatible.

In some embodiments, the context-sensitive classifier 118 is trained to evaluate a single type of context, such as whether the pair of content items have a sensitive contextual relationship, or whether the pair of content items have a supportive contextual relationship. When evaluating a single type of context the output could be a probability that the type of context applies.

In some embodiments, the context-sensitive classifier 118 is trained to evaluate multiple types of context at once. When evaluating multiple types of context the output could be an identification of the type of context with a probability that the type of context applies.

According to some examples, the method includes determining whether to present at least one candidate item in a user interface based on the prediction of whether the candidate item is contextually compatible or incompatible with the reference item at block 214. For example, the selection model 122 illustrated in FIG. 1 may determine whether to present at least one candidate item in a user interface based on the prediction of whether the candidate item is contextually compatible or incompatible with the reference item.

According to some examples, the method includes causing at least one candidate item to be presented in the user interface at block 216. For example, the selection model 122 illustrated in FIG. 1 may cause at least one candidate item to be presented in the user interface. The reference item is also presented in the user interface.

FIG. 3 illustrates an example of the context-sensitive classifier 118 in accordance with some embodiments of the present technology.

As illustrated in FIG. 3, the context-sensitive classifier 118 includes an embedding layer 314, a neural network 308, and a classification layer 310.

The embedding layer is a two-tower neural network model (e.g. Deep Structured Semantic Model (C-DSSM) and Twin Bidirectional Encoder Representations from Transformers (BERT)) that generates the reference item embedding and the candidate item embedding. A "Two-tower neural network model" refers to a neural network with two sub-models that learn embeddings for reference items and candidate items separately. The reference item embedding function 302 is the first tower that independently generates the reference item embedding, and the candidate item embedding function 306 is the second tower that independently generates the candidate item embedding.

In some embodiments, the embedding layer 314 utilizes a language model as the reference item embedding function 302 and the candidate item embedding function 306 to create the reference item embedding and the candidate item embedding. The language model can be specialized through tuning using a dataset of advertisements relevant to content items. In some embodiments, the language model can be a large language model or a transformer-based large language model.

Input features for each tower can include textual representations of the item (e.g., embeddings of the item overview and description) and item metadata (categories, recommended age restrictions, etc.). The item embedding representation is generated using a custom encoder obtained by fine-tuning the Bidirectional Encoder Representations from Transformers (BERT) language model to perform a multi-label category classification. The input for each tower can be represented by $E = \{e_1, e_2,..., e_i,...e_f\}$,

where $e_i \in R^k$ denotes the embedding or metadata feature of the $i^{th}$ field of the features, where $f$ represents the total number of fields, and k denotes the embedding dimensions. The output of each tower can be represented by $p = \{p_1, p_2, ..., p_n\}$ and $q = \{q_1, q_2, ..., q_n\}$ where $n$ denotes the output dimension.

The outputs of the reference item embedding function 302 and the candidate item embedding function 306 are concatenated and combined with the relationship feature 304 to form the input to the Matching Layer.

A "Relationship feature" refers to a parameter or expression descriptive of the relationship between the reference item and the candidate item. A relationship feature can be a measure of the similarity or relevance of the candidate item to the reference item. For example, the measure can be a similarity score, the distance between embeddings in an embedding space, etc. A relationship feature can be an expression stating a relationship between the attributes of the candidate item and the reference item. For example, an expression that it is false that the candidate item and the reference item belong to the same genre or an expression that it is true that the candidate item and the reference item have compatible topics. Some attributes for which an expression might be useful in this context include attributes that indicate whether the candidate item and the reference item are appropriate for audiences in different age bands, or are appropriate for audiences with different labels. For example, a kids reference item is not compatible with a mature audience candidate item. Other attributes for which an expression might be useful in this context include attributes that indicate whether the candidate item and the reference item pertain to topic categories that mix or don't, mix. For example, a reference item pertaining to marriage counseling does not mix with a candidate item pertaining to divorce. Other attributes for which an expression might be useful in this context include attributes that indicate whether a candidate item is spatially relevant to the reference item. For example, a reference item pertaining to an event occurring in Miami does not mix with a reference item pertaining to a candidate item having to do with Hong Kong. Other attributes for which an expression might be useful can be relevant to a supportive nature between two content items. For example, a statement that a first topic (e.g. Obtaining a visa) is supportive of a second topic (e.g., travel to an international destination).

In some embodiments, the relationship feature 304 can be a collection of expressions. For example, the relationship feature 304 can be <similarity score = .8 | Is=true, compatible age range | Is=false, compatible topic | Candidate item is= promoted>. In this example, the relationship feature expresses a similarity feature that provides context for why the candidate item is being considered, provides conclusions regarding aspects of the contextual relationship between the reference item and the candidate item, and indicates that the candidate item is an actively promoted item (e.g., the candidate is getting preferential treatment over potentially more similar candidate items).

It should be appreciated that the types of expressions and data included in the relationship feature are presented herein as examples only. The particular types of data or representations of data can be different. The only requirement for the relationship feature is that it provides some context relating the reference item to the candidate item. In some embodiments, the relationship feature is not required as the matching layer can also learn to identify some of these relationship features.

In some embodiments, the conclusions about the relationship between contexts, such as compatible age ranges and topics can be provided by a heuristic, machine learning algorithm, or other function.

As illustrated in FIG. 3 the relationship feature 304 is provided along with the reference item embedding and the candidate item embedding to the neural network 308. In some embodiments, the neural network 308 is a multi-layer perceptron neural network.

The neural network 308 uses additional features that capture relationship aspects between items, which include item similarity and other statistical features. These features $r = \{n, r_2, ..., r_m\}$ will be concatenated with $p$ and $q$ into a $2n + m$ dimension dense real-value feature vector $x = \{x_1, x_2, ..., x_{2n+m}\}$ and fed into a deep network with output $\hat{y} = \sigma(W^{L+1} a^L + b^{L+1})$, where $L$ is the depth of the matching layer deep network, $W$, $b$, $a$ as the model weight, bias and output in each layer. The learning process minimizes the cross entropy as the objective function:

$$loss = -\frac{1}{N} \Sigma \frac{N}{i=1} \left( y_i \log \hat{y}_i + \left( 1 - y_i \right) \log \left( 1 - \hat{y}_i \right) \right).$$

The output of neural network 308 is utilized by classification layer 310 to provide a prediction 312. The classification layer 310 can provide a prediction of whether the candidate item is contextually compatible or incompatible with the reference item. The prediction can include a probability of whether the pair of the reference item and the candidate item would be considered contextually compatible.

In some embodiments, the neural network 308 and classification layer 310 is trained to evaluate a single type of context, such as whether the pair of content items have a sensitive contextual relationship, or whether the pair of content items have a supportive contextual relationship. When evaluating a single type of context the output could be a probability that the type of context applies.

In some embodiments, the neural network 308 and classification layer 310 is trained to evaluate multiple types of context at once. When evaluating multiple types of context the output could be an identification of the type of context with a probability that the type of context applies.

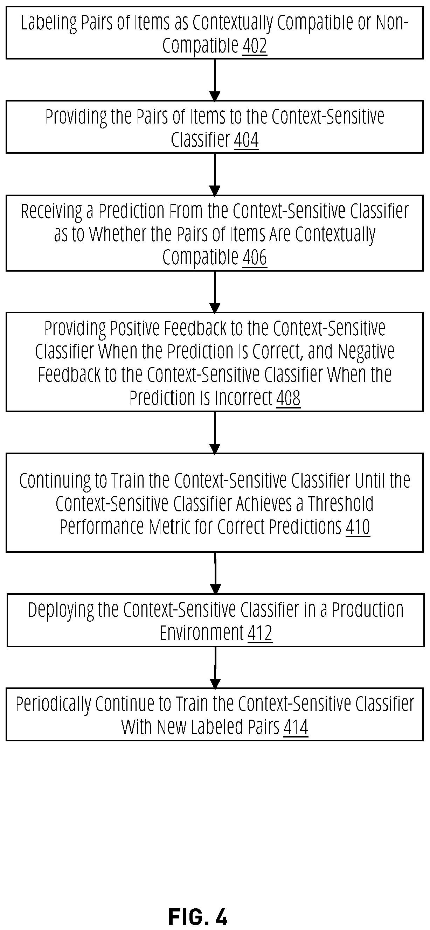

FIG. 4 illustrates an example routine for training the context-sensitive classifier 118 in accordance with some aspects of the present technology. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

According to some examples, the method includes labeling pairs of items as contextually compatible or non-compatible at block 402. In some embodiments, the labeling of the pairs of items further includes labeling the pairs of items as contextually supportive or contextually complementary.

According to some examples, the method includes providing the pairs of items to the context-sensitive classifier at block 404.

According to some examples, the method includes receiving a prediction from the context-sensitive classifier as to whether the pairs of items are contextually compatible at block 406. In some embodiments, the prediction is a probability that the candidate item is not contextually compatible with the reference item.

According to some examples, the method includes providing positive feedback to the context-sensitive classifier when the prediction is correct, and negative feedback to the context-sensitive classifier when the prediction is incorrect at block 408.

According to some examples, the method includes continuing to train the context-sensitive classifier until the context-sensitive classifier achieves a threshold performance metric for correct predictions at block 410.

According to some examples, the method includes deploying the context-sensitive classifier in a production environment at block 412.

According to some examples, the method includes periodically continuing to train the context-sensitive classifier with new labeled pairs at block 414. In some embodiments, the new labeled pairs are identified by users that give negative/positive feedback on the candidate item when it is presented in the user interface. In some embodiments, the new labeled pairs are selected using an active learning technique that selects pairs of items that are more difficult to classify. Pairs of items are more difficult to classify when the context-sensitive classifier outputs an ambiguous prediction probability, when labelers are divided about the proper label for the pair, or when the items are both associated with a sensitive category or context.

More specifically an embodiment of the context-sensitive classifier 118 was evaluated offline using human-labeled data for sensitive contextual relationships. The evaluation dataset was balanced and consisted of 8k pairs of items. We compared the context-sensitive classifier 118 with a rule-based baseline approach. The baseline rule uses existing embedding signals of the reference item and the candidate item, and the sensitivity of the contextual relationship is decided by item distance and item category features. ROC-AUC, recall and precision were used as metrics for the evaluation. The target was a recall close to 1 because it is crucial to eliminate the sensitive contextual relationship pairs from display and to remove any insensitive experience from users and advertisers. Hence, the threshold is set to ensure high recall in trade-off compared to precision. Table 1 shows the experiment results.

The present technology outperformed the rule-based approach in all evaluation metrics. The context-sensitive classifier 118 achieved high recall > 0.99 to almost completely eliminate the sensitive contextual relationships from displaying. In addition, our proposal has 0.6411 precision while the rule-based baseline has a much lower 0.1335 precision. A system with low precision could be overly conservative and falsely alarm which prevents good item-to-item recommendations from being shown and compromises recommendation diversity. In regard to this, the present technology has improved the precision almost 5 times in comparison to the baseline approach, greatly reduced the false alarms, and improved discovery opportunities in the recommendation system.

Table 1 - Experiment results comparing the proposed approach with a baseline rule-based approach.

| Approach | AUC | Recall | Precision |
|---|---|---|---|
| context-sensitive classifier | 0.8677 | 0.9925 | 0.6411 |
| Rule-based | 0.5190 | 0.8410 | 0.1335 |

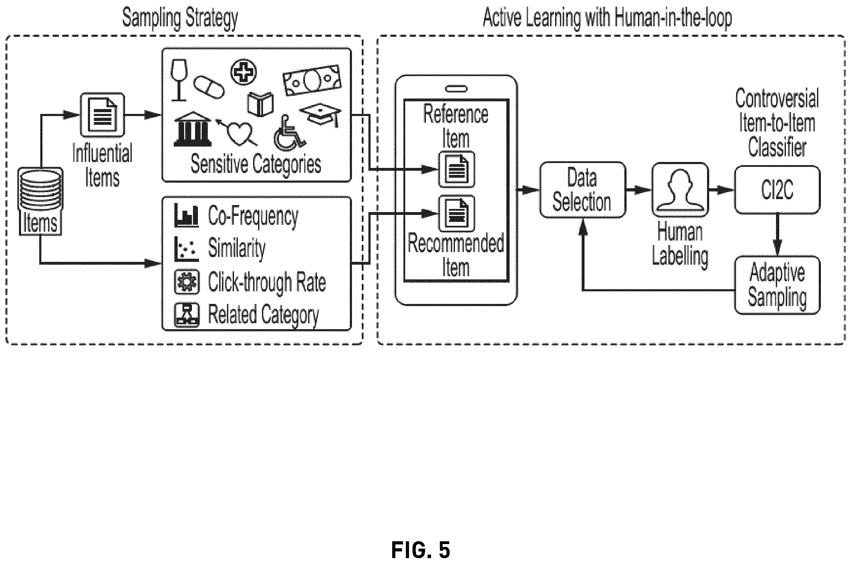

FIG. 5 illustrates an example sampling strategy for active learning in accordance with some aspects of the present technology.

In some embodiments, an active sampling strategy can be deployed to improve the ability of the context-sensitive classifier 118 to perform well on difficult prediction tasks. In order to effectively eliminate controversial recommendations, the most influential items within sensitive categories are preferentially selected. Sensitive categories include, for example, health, medicine, and pharmaceutical industry, categories with a touch of romance theme, items with monetary incentives or could have an impact on a user's financial wellness, etc. These item sample pairs are ranked based on predicted high click-through rate (CTR), and factors such as co-engagement statistics, item similarities, and related categories. The sampled <reference item, candidate item> pairs are unlabeled raw data as shown in FIG. 5.

Active learning is crucial particularly when dealing with large unlabeled data, as it improves learning by selecting the most informative samples based on the predicted confidence of the unlabeled data. In this process, we adaptively sample as the model predicts the confidence of whether the item pair is problematic or not. The low-confidence data samples are sent for human labeling. This human-in-the-loop approach not only reduces the amount of labeled data needed for effective training but also leads to improved model performance in a shorter amount of time.

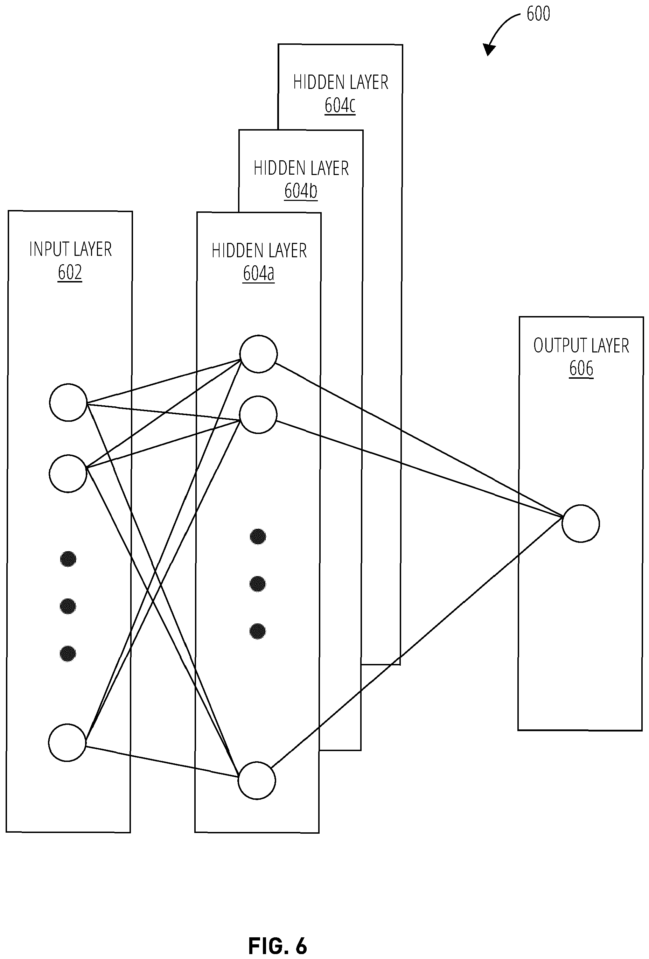

In FIG. 6, the disclosure now turns to a further discussion of models that can be used through the environments and techniques described herein. Specifically, FIG. 6 is an illustrative example of a deep learning neural network 600 that can be used to implement all or a portion of context-sensitive classifier 118 as discussed above. An input layer 602 can be configured to receive sensor data and/or data relating to an environment surrounding an AV. The neural network 600 includes multiple hidden layers 604a, 604b, through 604c. The hidden layers 604a through 604c include "n" number of hidden layers, where "n" is an integer greater than or equal to one. The number of hidden layers can be made to include as many layers as needed for the given application. The neural network 600 further includes an output layer 606 that provides an output resulting from the processing performed by the hidden layers 604a through 604c. In one illustrative example, the output layer 606 can provide estimated treatment parameters, that can be used/ingested by a differential simulator to estimate a patient treatment outcome.

The neural network 600 is a multi-layer neural network of interconnected nodes. Each node can represent a piece of information. Information associated with the nodes is shared among the different layers and each layer retains information as information is processed. In some cases, the neural network 600 can include a feed-forward network, in which case there are no feedback connections where outputs of the network are fed back into itself. In some cases, the neural network 600 can include a recurrent neural network, which can have loops that allow information to be carried across nodes while reading in input.

Information can be exchanged between nodes through node-to-node interconnections between the various layers. Nodes of the input layer 602 can activate a set of nodes in the first hidden layer 604a. For example, as shown, each of the input nodes of the input layer 602 is connected to each of the nodes of the first hidden layer 604a. The nodes of the first hidden layer 604a can transform the information of each input node by applying activation functions to the input node information. The information derived from the transformation can then be passed to and can activate the nodes of the next hidden layer 604b, which can perform their own designated functions. Example functions include convolutional, up-sampling, data transformation, and/or any other suitable functions. The output of the hidden layer 604b can then activate nodes of the next hidden layer, and so on. The output of the last hidden layer 604c can activate one or more nodes of the output layer 606, at which an output is provided. In some cases, while nodes in the neural network 600 are shown as having multiple output lines, a node can have a single output and all lines shown as being output from a node represent the same output value.

In some cases, each node or interconnection between nodes can have a weight that is a set of parameters derived from the training of the neural network 600. Once the neural network 600 is trained, it can be referred to as a trained neural network, which can be used to classify one or more activities. For example, an interconnection between nodes can represent a piece of information learned about the interconnected nodes. The interconnection can have a tunable numeric weight that can be tuned (e.g., based on a training dataset), allowing the neural network 600 to be adaptive to inputs and able to learn as more and more data is processed.

The neural network 600 is pre-trained to process the features from the data in the input layer 602 using the different hidden layers 604a through 604c in order to provide the output through the output layer 606.

In some cases, the neural network 600 can adjust the weights of the nodes using a training process called backpropagation. A backpropagation process can include a forward pass, a loss function, a backward pass, and a weight update. The forward pass, loss function, backward pass, and parameter/weight update is performed for one training iteration. The process can be repeated for a certain number of iterations for each set of training data until the neural network 600 is trained well enough so that the weights of the layers are accurately tuned.

To perform training, a loss function can be used to analyze error in the output. Any suitable loss function definition can be used, such as a Cross-Entropy loss. Another example of a loss function includes the mean squared error (MSE), defined as $E\_total = \Sigma(1/2 \text{ (target-output)}A2)$. The loss can be set to be equal to the value of E_total.

The loss (or error) will be high for the initial training data since the actual values will be much different than the predicted output. The goal of training is to minimize the amount of loss so that the predicted output is the same as the training output. The neural network 600 can perform a backward pass by determining which inputs (weights) most contributed to the loss of the network, and can adjust the weights so that the loss decreases and is eventually minimized.

The neural network 600 can include any suitable deep network. One example includes a Convolutional Neural Network (CNN), which includes an input layer and an output layer, with multiple hidden layers between the input and out layers. The hidden layers of a CNN include a series of convolutional, nonlinear, pooling (for downsampling), and fully connected layers. The neural network 600 can include any other deep network other than a CNN, such as an autoencoder, Deep Belief Nets (DBNs), Recurrent Neural Networks (RNNs), among others.

As understood by those of skill in the art, machine-learning based classification techniques can vary depending on the desired implementation. For example, machine-learning classification schemes can utilize one or more of the following, alone or in combination: hidden Markov models; RNNs; CNNs; deep learning; Bayesian symbolic methods; Generative Adversarial Networks (GANs); support vector machines; image registration methods; and applicable rule-based systems. Where regression algorithms are used, they may include but are not limited to: a Stochastic Gradient Descent Regressor, a Passive Aggressive Regressor, etc.

Machine learning classification models can also be based on clustering algorithms (e.g., a Mini-batch K-means clustering algorithm), a recommendation algorithm (e.g., a Minwise Hashing algorithm, or Euclidean Locality-Sensitive Hashing (LSH) algorithm), and/or an anomaly detection algorithm, such as a local outlier factor. Additionally, machine-learning models can employ a dimensionality reduction approach, such as, one or more of: a Mini-batch Dictionary Learning algorithm, an incremental Principal Component Analysis (PCA) algorithm, a Latent Dirichlet Allocation algorithm, and/or a Mini-batch K-means algorithm, etc.

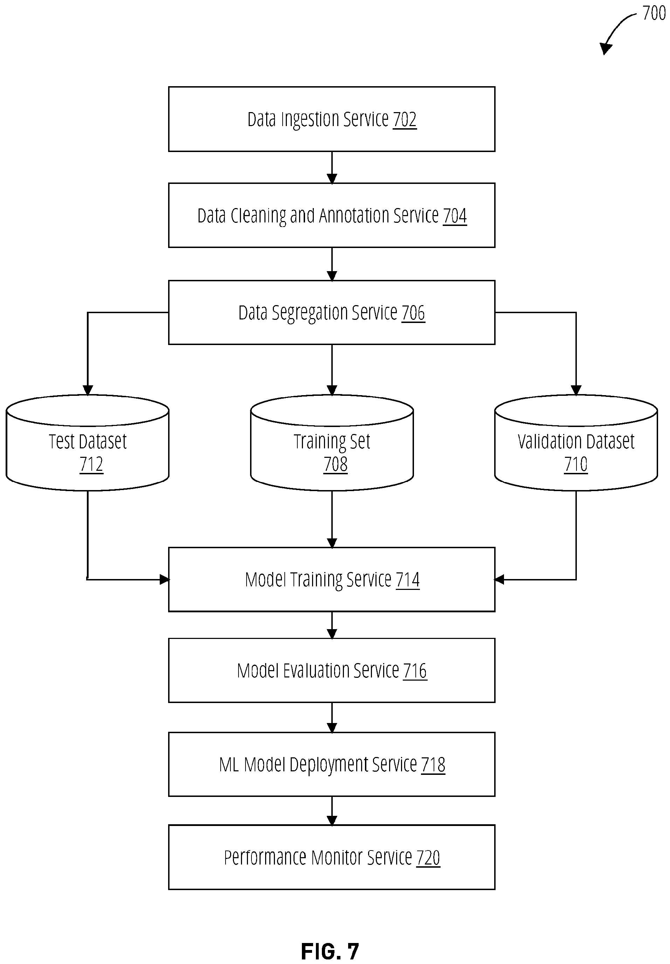

FIG. 7 illustrates an example lifecycle 700 of a ML model in accordance with some aspects of the present technology. The first stage of the lifecycle 700 of a ML model is a data ingestion service 702 to generate datasets described below. ML models require a significant amount of data for the various processes described in FIG. 7 and the data persisted without undertaking any transformation to have an immutable record of the original dataset. The data can be provided from third party sources such as publicly available dedicated datasets. The data ingestion service 702 provides a service that allows for efficient querying and end-to-end data lineage and traceability based on a dedicated pipeline for each dataset, data partitioning to take advantage of the multiple servers or cores, and spreading the data across multiple pipelines to reduce the overall time to reduce data retrieval functions.

In some cases, the data may be retrieved offline that decouples the producer of the data from the consumer of the data (e.g., an ML model training pipeline). For offline data production, when source data is available from the producer, the producer publishes a message and the data ingestion service 702 retrieves the data. In some examples, the data ingestion service 702 may be online and the data is streamed from the producer in real-time for storage in the data ingestion service 702.

After data ingestion service 702, a data preprocessing service preprocesses the data to prepare the data for use in the lifecycle 700 and includes at least data cleaning, data transformation, and data selection operations. The data cleaning and annotation service 704 removes irrelevant data (data cleaning) and general preprocessing to transform the data into a usable form. The data cleaning and annotation service 704 includes labelling of features relevant to the ML model. In some examples, the data cleaning and annotation service 704 may be a semi-supervised process performed by a ML to clean and annotate data that is complemented with manual operations such as labeling of error scenarios, identification of untrained features, etc.

After the data cleaning and annotation service 704, data segregation service 706 to separate data into at least a training set 708, a validation dataset 710, and a test dataset 712. Each of the training set 708, a validation dataset 710, and a test dataset 712 are distinct and do not include any common data to ensure that evaluation of the ML model is isolated from the training of the ML model.

The training set 708 is provided to a model training service 714 that uses a supervisor to perform the training, or the initial fitting of parameters (e.g., weights of connections between neurons in artificial neural networks) of the ML model. The model training service 714 trains the ML model based a gradient descent or stochastic gradient descent to fit the ML model based on an input vector (or scalar) and a corresponding output vector (or scalar).

After training, the ML model is evaluated at a model evaluation service 716 using data from the validation dataset 710 and different evaluators to tune the hyperparameters of the ML model. The predictive performance of the ML model is evaluated based on predictions on the validation dataset 710 and iteratively tunes the hyperparameters based on the different evaluators until a best fit for the ML model is identified. After the best fit is identified, the test dataset 712, or holdout data set, is used as a final check to perform an unbiased measurement on the performance of the final ML model by the model evaluation service 716. In some cases, the final dataset that is used for the final unbiased measurement can be referred to as the validation dataset and the dataset used for hyperparameter tuning can be referred to as the test dataset.

After the ML model has been evaluated by the model evaluation service 716, an ML model deployment service 718 can deploy the ML model into an application or a suitable device. The deployment can be into a further test environment such as a simulation environment, or into another controlled environment to further test the ML model.

After deployment by the ML model deployment service 718, a performance monitor service 720 monitors for performance of the ML model. In some cases, the performance monitor service 720 can also record additional transaction data that can be ingested via the data ingestion service 702 to provide further data, additional scenarios, and further enhance the training of ML models.

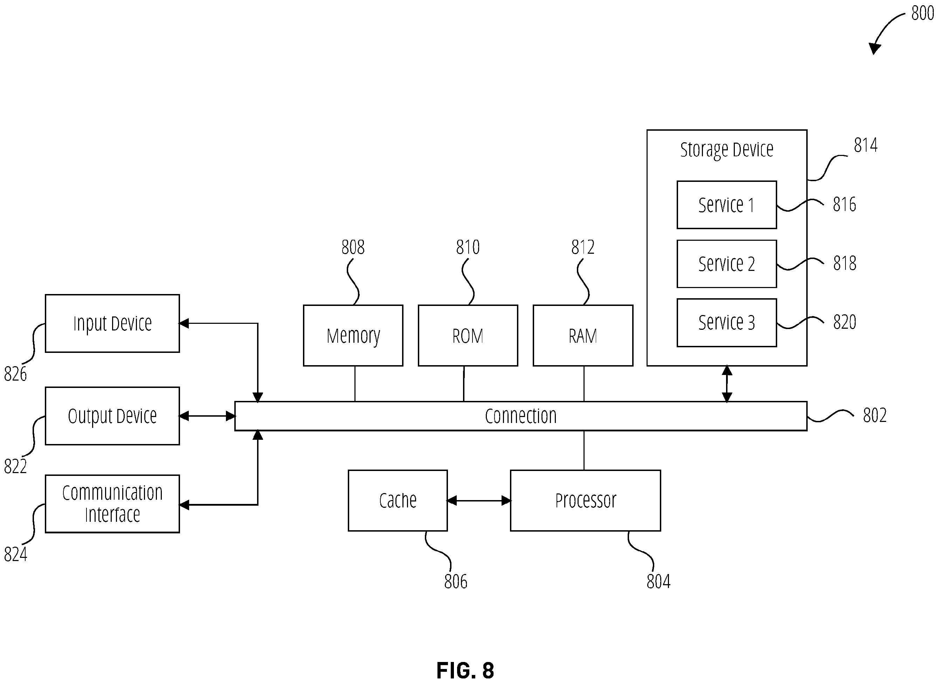

FIG. 8 shows an example of computing system 800, which can be for example any computing device making up context-sensitive classifier 118, or any component thereof in which the components of the system are in communication with each other using connection 802. Connection 802 can be a physical connection via a bus, or a direct connection into processor 804, such as in a chipset architecture. Connection 802 can also be a virtual connection, networked connection, or logical connection.

In some embodiments, computing system 800 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example computing system 800 includes at least one processing unit (CPU or processor) 804 and connection 802 that couples various system components including system memory 808, such as read-only memory (ROM) 810 and random access memory (RAM) 812 to processor 804. Computing system 800 can include a cache of high-speed memory 806 connected directly with, in close proximity to, or integrated as part of processor 804.

Processor 804 can include any general purpose processor and a hardware service or software service, such as services 816, 818, and 820 stored in storage device 814, configured to control processor 804 as well as a special-purpose processor where software instructions are incorporated into the actual processor design. Processor 804 may essentially be a completely self-contained computing system, containing multiple cores or processors, a bus, memory controller, cache, etc. A multi-core processor may be symmetric or asymmetric.

To enable user interaction, computing system 800 includes an input device 826, which can represent any number of input mechanisms, such as a microphone for speech, a touch-sensitive screen for gesture or graphical input, keyboard, mouse, motion input, speech, etc. Computing system 800 can also include output device 822, which can be one or more of a number of output mechanisms known to those of skill in the art. In some instances, multimodal systems can enable a user to provide multiple types of input/output to communicate with computing system 800. Computing system 800 can include communication interface 824, which can generally govern and manage the user input and system output. There is no restriction on operating on any particular hardware arrangement, and therefore the basic features here may easily be substituted for improved hardware or firmware arrangements as they are developed.

Storage device 814 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 814 can include software services, servers, services, etc., that when the code that defines such software is executed by the processor 804, it causes the system to perform a function. In some embodiments, a hardware service that performs a particular function can include the software component stored in a computer-readable medium in connection with the necessary hardware components, such as processor 804, connection 802, output device 822, etc., to carry out the function.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Some aspects of the present technology include:

Aspect 1. A method comprising: receiving at least one reference item and at least one candidate item by a context-sensitive classifier; by the context-sensitive classifier, of whether the candidate item is contextually compatible or incompatible with the reference item; and determining whether to present the at least one candidate item in a user interface based on the prediction of whether the candidate item is contextually compatible or incompatible with the reference item.

Aspect 2. The method of Aspect 1, further comprising: causing the at least one candidate item to be presented in the user interface.

Aspect 3. The method of any of Aspects 1 to 2, wherein the reference item is also presented in the user interface.

Aspect 4. The method of any of Aspects 1 to 3, further comprising: prior to the receiving the at least one candidate item by the context-sensitive classifier, identifying the at least one candidate item as being relevant to the at least one reference item.

Aspect 5. The method of any of Aspects 1 to 4, wherein the at least one candidate item is a promoted item.

Aspect 6. The method of any of Aspects 1 to 5, wherein the at least one candidate item is a promoted item and is relevant to the at least one reference item.

Aspect 7. The method of any of Aspects 1 to 6, wherein the at least one reference item is a search criterion, a media item such as a book, application, video, music, social media post, and/or a product.

Aspect 8. The method of any of Aspects 1 to 7, wherein the at least one candidate item is a media item such as a book, application, video, music, social media post, and/or a product.

Aspect 9. The method of any of Aspects 1 to 8, further comprising: after the receiving of the at least one reference item and at least one candidate item and prior to providing the prediction, creating a reference item embedding, and creating a candidate item embedding.

Aspect 10. The method of any of Aspects 1 to 9 wherein the context-sensitive classifier includes an embedding layer and a classification layer, wherein the classification layer is a multi-layer perceptron neural network.

Aspect 11. The method of any of Aspects 1 to 10, wherein the embedding layer is a two-tower neural network model that generates the reference item embedding and the candidate item embedding.

Aspect 12. The method of any of Aspects 1 to 11, further comprising: determining at least one relationship feature as between the at least one reference item and the at least one candidate item.

Aspect 13. The method of any of Aspects 1 to 12, further comprising: inputting the at least one relationship feature into the classification layer along with the reference item embedding and the candidate item embedding.

Aspect 14. The method of any of Aspects 1 to 13, wherein the embedding layer utilizes a language model to create the reference item embedding and the candidate item embedding.

Aspect 15. The method of any of Aspects 1 to 14, wherein the language model is trained on a dataset of advertisements relevant to content items.

Aspect 16. The method of any of Aspects 1 to 15, wherein the context-sensitive classifier is a trained machine learning model that is trained according to the method comprising: labeling pairs of items as contextually compatible or non-compatible; providing the pairs of items to the context-sensitive classifier; receiving a prediction from the context-sensitive classifier as to whether the pairs of items are contextually compatible; and providing positive feedback to the context-sensitive classifier when the prediction is correct, and negative feedback to the context-sensitive classifier when the prediction is incorrect.

Aspect 17. The method of any of Aspects 1 to 16, wherein the labeling the pairs of items further includes labeling the pairs of items as contextually supportive or contextually complementary.

Aspect 18. The method of any of Aspects 1 to 17, the method comprising: continuing to train the context-sensitive classifier until the context-sensitive classifier achieves a threshold performance metric for correct predictions; after the context-sensitive classifier achieves the threshold performance metric for correct predictions, deploying the context-sensitive classifier in a production environment; periodically continue to train the context-sensitive classifier with new labeled pairs.

Aspect 19. The method of any of Aspects 1 to 18, wherein the new labeled pairs are labeled by users that give negative / positive feedback on the candidate item when it is presented in the user interface.

Aspect 20. The method of any of Aspects 1 to 19, wherein the new labeled pairs are selected using an active learning technique that selects pairs of items that are more difficult to classify.

Aspect 21. The method of any of Aspects 1 to 20, pairs of items are more difficult to classify when the context-sensitive classifier outputs an ambiguous prediction probability, or when labelers are divided about the proper

Aspect 22. The method of any of Aspects 1 to 21, wherein the prediction is a probability that the candidate item is not contextually compatible with the reference item.

Exemplary methods, computing systems, non-transitory computer-readable storage media, and computer-readable storage media are set out in the following items.

1. A method comprising:

receiving at least one reference item and at least one candidate item by a context-sensitive classifier;
providing a prediction, by the context-sensitive classifier, of whether the candidate item is contextually compatible or incompatible with the reference item; and
determining whether to present the at least one candidate item in a user interface based on the prediction of whether the candidate item is contextually compatible or incompatible with the reference item.

2. The method of item 1, further comprising:
causing the at least one candidate item to be presented in the user interface when the at least one candidate item is contextually compatible with the reference item.

3. The method of item 1, further comprising:
prior to the receiving the at least one candidate item by the context-sensitive classifier, identifying the at least one candidate item as being relevant to the at least one reference item.

4. The method of item 1, further comprising:
after the receiving of the at least one reference item and at least one candidate item and prior to providing the prediction, creating a reference item embedding, and creating a candidate item embedding.

5. The method of item 1 wherein the context-sensitive classifier includes an embedding layer and a classification layer, wherein the classification layer is a multi-layer perceptron neural network , wherein the embedding layer is a two-tower neural network model that generates the reference item embedding and the candidate item embedding.

6. The method of item 5, further comprising:
determining at least one relationship feature as between the at least one reference item and the at least one candidate item.

7. The method of item 6, further comprising:
inputting the at least one relationship feature into the classification layer along with the reference item embedding and the candidate item embedding.

8. The method of item 5, wherein the embedding layer utilizes a language model to create the reference item embedding and the candidate item embedding.

9. The method of item 8, wherein the language model is trained on a dataset of advertisements relevant to content items.

10. A computing system comprising:

    a processor; and
    a memory storing instructions that, when executed by the processor, configure the system to:

        receive at least one reference item and at least one candidate item by a context-sensitive classifier;
        provide a prediction, by the context-sensitive classifier, of whether the candidate item is contextually compatible or incompatible with the reference item; and
        determine whether to present the at least one candidate item in a user interface based on the prediction of whether the candidate item is contextually compatible or incompatible with the reference item.

11. The computing system of item 10, wherein the instructions further configure the system to:
prior to the receiving the at least one candidate item by the context-sensitive classifier, identify the at least one candidate item as being relevant to the at least one reference item.

12. The computing system of item 10, wherein the instructions further configure the system to:
after the receiving of the at least one reference item and at least one candidate item and prior to providing the prediction, create a reference item embedding, and creating a candidate item embedding.

13. The computing system of item 11, wherein the instructions further configure the system to:
determine at least one relationship feature as between the at least one reference item and the at least one candidate item.

14. The computing system of item 13, wherein the instructions further configure the system to:
inputting the at least one relationship feature into the classification layer along with the reference item embedding and the candidate item embedding.

15. A non-transitory computer-readable storage medium, the computer-readable storage medium including instructions that when executed by a computer, cause the computer to:

    receive at least one reference item and at least one candidate item by a context-sensitive classifier;
    provide a prediction, by the context-sensitive classifier, of whether the candidate item is contextually compatible or incompatible with the reference item; and
    determine whether to present the at least one candidate item in a user interface based on the prediction of whether the candidate item is contextually compatible or incompatible with the reference item.

16. The computer-readable storage medium of item 15 wherein the context-sensitive classifier includes an embedding layer and a classification layer, wherein the classification layer is a multi-layer perceptron neural network, wherein the embedding layer is a two-tower neural network model that generates the reference item embedding and the candidate item embedding.

17. The computer-readable storage medium of item 16, wherein the instructions further configure the computer to: determine at least one relationship feature as between the at least one reference item and the at least one candidate item.

18. The computer-readable storage medium of item 17, wherein the instructions further configure the computer to: input the at least one relationship feature into the classification layer along with the reference item embedding and the candidate item embedding.

19. The computer-readable storage medium of item 16, wherein the embedding layer utilizes a language model to create the reference item embedding and the candidate item embedding.

20. The computer-readable storage medium of item 19, wherein the language model is trained on a dataset of advertisements relevant to content items.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

**Claims**

1. A method comprising:

   receiving at least one reference item and at least one candidate item by a context-sensitive classifier;
   providing a prediction, by the context-sensitive classifier, of whether the candidate item is contextually compatible or incompatible with the reference item; and
   determining whether to present the at least one candidate item in a user interface based on the prediction of whether the candidate item is contextually compatible or incompatible with the reference item.

2. The method of claim 1, further comprising:
   causing the at least one candidate item to be presented in the user interface when the at least one candidate item is contextually compatible with the reference item.

3. The method of any one of claims 1-2, further comprising:
   prior to the receiving the at least one candidate item by the context-sensitive classifier, identifying the at least one candidate item as being relevant to the at least one reference item.

4. The method of any one of claims 1-3, further comprising:
   after the receiving of the at least one reference item and at least one candidate item and prior to providing the prediction, creating a reference item embedding, and creating a candidate item embedding.

5. The method of any one of claims 1-4, wherein the context-sensitive classifier includes an embedding layer and a classification layer, wherein the classification layer is a multi-layer perceptron neural network, wherein the embedding layer is a two-tower neural network model that generates the reference item embedding and the candidate item embedding.

6. The method of claim 5, further comprising:
   determining at least one relationship feature as between the at least one reference item and the at least one candidate item.

7. The method of claim 6, further comprising:
inputting the at least one relationship feature into the classification layer along with the reference item embedding and the candidate item embedding.

8. The method of any one of claims 5-6, wherein the embedding layer utilizes a language model to create the reference item embedding and the candidate item embedding.

9. The method of claim 8, wherein the language model is trained on a dataset of advertisements relevant to content items.

10. A computing system comprising:

    a processor; and
    a memory storing instructions that, when executed by the processor, configure the system to perform the method of any one of claims 1-9.

11. A non-transitory computer-readable storage medium, the computer-readable storage medium comprising instructions that when executed by a computer, cause the computer to perform the method of any one of claims 1-9.

FIG. 1

```
┌──────────────────────────────────────────────────────────────┐
│ Identifying the at Least One Candidate Item as Being Relevant to │
│        the at Least One Reference Item 202                        │
└──────────────────────────────────────────────────────────────┘
                              ↓
┌──────────────────────────────────────────────────────────────┐
│   Receiving at Least One Reference Item and at Least One         │
│                Candidate Item 204                                │
└──────────────────────────────────────────────────────────────┘
                              ↓
┌──────────────────────────────────────────────────────────────┐
│ Creating a Reference Item Embedding, and Creating a Candidate   │
│                Item Embedding 206                                │
└──────────────────────────────────────────────────────────────┘
                              ↓
┌──────────────────────────────────────────────────────────────┐
│ Determining at Least One Relationship Feature as Between the at │
│  Least One Reference Item and the at Least One Candidate Item    │
│                        208                                       │
└──────────────────────────────────────────────────────────────┘
                              ↓
┌──────────────────────────────────────────────────────────────┐
│   Inputting the at Least One Relationship Feature Into the       │
│  Classification Layer Along With the Reference Item Embedding    │
│         and the Candidate Item Embedding 210                     │
└──────────────────────────────────────────────────────────────┘
                              ↓
┌──────────────────────────────────────────────────────────────┐
│    Providing a Prediction of Whether the Candidate Item Is       │
│ Contextually Compatible or Incompatible With the Reference Item  │
│                        212                                       │
└──────────────────────────────────────────────────────────────┘
                              ↓
┌──────────────────────────────────────────────────────────────┐
│ Determining Whether to Present the at Least One Candidate Item   │
│  in a User Interface Based on the Prediction of Whether the      │
│ Candidate Item Is Contextually Compatible or Incompatible With   │
│              the Reference Item 214                              │
└──────────────────────────────────────────────────────────────┘
                              ↓
┌──────────────────────────────────────────────────────────────┐
│ Causing the at Least One Candidate Item to Be Presented in the  │
│                User Interface 216                                │
└──────────────────────────────────────────────────────────────┘
```

**FIG. 2**

**FIG. 3**

Labeling Pairs of Items as Contextually Compatible or Non-Compatible 402

↓

Providing the Pairs of Items to the Context-Sensitive Classifier 404

↓

Receiving a Prediction From the Context-Sensitive Classifier as to Whether the Pairs of Items Are Contextually Compatible 406

↓

Providing Positive Feedback to the Context-Sensitive Classifier When the Prediction Is Correct, and Negative Feedback to the Context-Sensitive Classifier When the Prediction Is Incorrect 408

↓

Continuing to Train the Context-Sensitive Classifier Until the Context-Sensitive Classifier Achieves a Threshold Performance Metric for Correct Predictions 410

↓

Deploying the Context-Sensitive Classifier in a Production Environment 412

↓

Periodically Continue to Train the Context-Sensitive Classifier With New Labeled Pairs 414

## FIG. 4

FIG. 5

**FIG. 6**

700

```
┌─────────────────────────────────────┐
│   Data Ingestion Service 702         │
└─────────────────────────────────────┘
                  │
                  ▼
┌─────────────────────────────────────┐
│ Data Cleaning and Annotation Service 704 │
└─────────────────────────────────────┘
                  │
                  ▼
┌─────────────────────────────────────┐
│   Data Segregation Service 706       │
└─────────────────────────────────────┘
```

Test Dataset
712

Training Set
708

Validation Dataset
710

Model Training Service 714

Model Evaluation Service 716

ML Model Deployment Service 718

Performance Monitor Service 720

**FIG. 7**

**FIG. 8**

EP 4 471 701 A1

Europäisches
Patentamt

European
Patent Office

Office européen
des brevets

# EUROPEAN SEARCH REPORT

Application Number

EP 24 17 2699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 275 819 B1 (JOHNSON JOSEPH EDWIN [US] ET AL) 30 April 2019 (2019-04-30) <br> * column 6, line 49 - line 52 * <br> * column 9, line 57 - line 62 * <br> * column 10, line 6 - line 9 * <br> * column 14, line 3 - line 48 * <br> * column 20, line 24 - line 27 * <br> * column 20, line 63 - line 67 * <br> * column 21, line 45 - line 51 * <br> * figures 2, 5 * <br> - - - - - | 1-11 | INV. <br> G06Q30/0601 <br> G06N3/045 |
| A | US 2023/056148 A1 (ENTEZARI NEGIN [US] ET AL) 23 February 2023 (2023-02-23) <br> * paragraph [0052] - paragraph [0054] * <br> - - - - - | 4 | |
| A | US 2022/358366 A1 (LEE CHIHOON [US] ET AL) 10 November 2022 (2022-11-10) <br> * paragraph [0037] - paragraph [0041] * <br> * paragraph [0031] * <br> * figure 3 * <br> - - - - - | 5-8 | |
| A | US 2022/237682 A1 (ZHAO HANDONG [US] ET AL) 28 July 2022 (2022-07-28) <br> * paragraph [0072] - paragraph [0074] * <br> - - - - - | 8 | **TECHNICAL FIELDS SEARCHED (IPC)** <br><br> G06Q <br> G06N |

The present search report has been drawn up for all claims

| Place of search | Date of completion of the search | Examiner |
|---|---|---|
| The Hague | 25 June 2024 | Stark, Konrad |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P04C01)

**EP 4 471 701 A1**

## ANNEX TO THE EUROPEAN SEARCH REPORT
## ON EUROPEAN PATENT APPLICATION NO.

EP 24 17 2699

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2024

| Patent document cited in search report | | Publication date | Patent family member(s) | | Publication date |
|---|---|---|---|---|---|
| US 10275819 | B1 | 30-04-2019 | NONE | | |
| US 2023056148 | A1 | 23-02-2023 | NONE | | |
| US 2022358366 | A1 | 10-11-2022 | US 2022358366 A1 | | 10-11-2022 |
| | | | WO 2022235599 A1 | | 10-11-2022 |
| US 2022237682 | A1 | 28-07-2022 | NONE | | |

EPO FORM P0459

For more details about this annex : see Official Journal of the European Patent Office, No. 12/82